# EUROPÄISCHE PATENTSCHRIFT

(11) **EP 1 422 000 B1**
(45) Veröffentlichungstag und Bekanntmachung des Hinweises auf die Patenterteilung: **19.09.2007**
(21) Anmeldenummer: 03025558.2
(22) Anmeldetag: 08.11.2003
(51) Int. Cl.: B09B 3/00, B03B 9/06, B02C 19/00, B29B 17/02, B29B 17/00

(54) **Verfahren und Anlage zum Aufbereiten von Treibgas enthaltendem Mahlgut**
Method and apparatus for treating blowing gas containing material
Procédé et dispositif pour traiter des materiaux contenant un gaz propulseur

(30) Priorität: 22.11.2002 DE 10254790
(43) Veröffentlichungstag der Anmeldung: 26.05.2004
(73) Patentinhaber: Anlagenbau Umwelt + Technik Chemnitz GmbH, 09116 Chemnitz (DE)
(72) Erfinder: Winter, Mirko, 09116 Chemnitz (DE); Teschner, Steffen, 09599 Freiberg/Sa (DE)
(74) Vertreter: Grünecker, Kinkeldey, Stockmair & Schwanhäusser Anwaltssozietät

(56) Entgegenhaltungen:
- EP-A- 0 538 677
- EP-A- 0 606 891
- EP-A- 1 215 023
- WO-A-02/38295
- DE-A- 3 911 326
- DE-A- 3 911 596
- DE-A- 19 821 470
- DE-U- 9 001 655
- PATENT ABSTRACTS OF JAPAN vol. 1996, no. 07, 31. Juli 1996 (1996-07-31) & JP 08 067764 A (HITACHI LTD), 12. März 1996 (1996-03-12)

## Beschreibung

Die Erfindung betrifft ein Verfahren und eine Anlage zum Aufbereiten von Treibgas enthaltendem Mahlgut, wobei in einem Zerkleinerungsvorgang mittels Schlagelementen, die mehrere Freiheitsgrade besitzen, innerhalb eines geschlossenen Raumes mit erneuerbarer, inerter Atmosphäre, weiter zerkleinertes Mahlgut erzeugt wird, das auch eine Feinfraktion besitzt, die pulver- und/oder flockenförmig zerkleinertes Schaumstoffmaterial aufweist, wobei die Feinfraktion mittels Siebvorrichtung von einer Grobfraktion abgeschieden wird und wobei das weiter zerkleinerte Mahlgut in mindestens einem abgeschlossenen Raum mit erneuerbarer Atmosphäre einem Ausgasprozess unterworfen wird.

Ein Verfahren der genannten Art ist u. a. durch die DE 39 11 326 A1 bekannt geworden. Die Gehäuse von Kühlaggregaten werden zunächst in einer abgeschlossenen Atmosphäre mittels Shredder vorzerkleinert. Das vorzerkleinerte Gut wird über einen eingehausten Schneckenförderer einer Schneidmühle zugeführt, die das Mahlgut weiter auf eine Teilchengröße von mehreren Zentimetern zerkleinert. In einem nachgeschalteten Windsichter wird das Schwergut von der Leichtfraktion getrennt.

Die Leichtfraktion, die auch den Schaumstoff mit flüchtigen Gasen enthält, wird unterkühlt und in einer Wirbelstrommühle zermahlen, so dass die Leichtfraktion im Wesentlichen aus mehlförmigen Bestandteilen und kleinen Flocken besteht. Diese Feinfraktion wird in einem anschließend angeordneten Zyklon von dem frei gewordenen Gas getrennt. Die Feststoffe werden gepresst und zur Wiederverwendung verpackt.

Mit einer derartigen Anordnung, die im Bereich aller Vorrichtungen und Förderstrecken das Gas, das mit Treibmitteln angereichert ist, absaugt, kann eine nahezu vollständige Abscheidung des Treibgases aus den Hohlräumen der wiederverwertbaren Stoffe erfolgen. Nachteilig ist jedoch der große Aufwand für eine derartige Anlage. An den Übergängen zwischen den einzelnen Vorrichtungen sind entlang des Mahlgutstromes immer wieder Möglichkeiten gegeben, dass Teile des Treibgases in die Atmosphäre gelangen. Dort führt es zu den bekannten Wirkungen hinsichtlich des Treibhauseffektes.

Durch die DE 39 11 596 A1 wird eine Anlage in ähnlicher Art beschrieben. Mit einer Zerkleinerungsvorrichtung, die mit umlaufenden Schlägwerkzeugen, die an der antreibenden Achse beweglich befestigt sind, Wird das vorzerkleinerte Mahlgut weiter zerkleinert. Die Kunststoffteile - insb. PUR und Styropor - werden dabei nahezu vollständig aufgelöst und liegen in Pulver- oder Flockenform vor.

Der Zerkleinerungsvorrichtung ist im Materialfluss des Mahlgutes eine sog. Rüttlerschleuse nachgeordnet. In dieser Rüttlerschleuse werden Grobteile seitlich aus dem Materialstrom entfernt. Die kleineren Grobteile verbleiben in einem ersten Mahlgutstrom, während sehr kleine Teile - das Kleingutgemisch - einem dritten Mahlgutstrom folgen.

Das Staub und Gas führende Kleingutgemisch wird mittels bekannter Vorrichtungen in Gas und Festbestandteile getrennt.

Das Gas wird einer Aufbereitungseinrichtung zugeführt, während die verbleibenden Feststoffe feiner Struktur einer weiteren Aufbereitung unterzogen werden. Eine solche Vorrichtung oder eine derartige Anlage ist unbefriedigend, da die einstufige Zerkleinerung die Schaumstoffe mit dem eingelagerten Treibgas in angemessener Zeit nicht ausreichend von anderen festen Teilen lösen kann. Die Schaumstoffe gelangen dadurch mit der gröberen Fraktion in Aufbereitungswege, die sehr vielgestaltig sind. Das Absaugen des Treibgases ist dort sehr problematisch und erfordert ein weit verzweigtes Netz, das oft fehlerhaft arbeitet.

Die gesetzlich festgelegten Mindestanforderungen hinsichtlich der Restwerte an Treibgasen im Kunststoff können damit nicht gesichert werden.

Eine weitere Anlage zur Zerkleinerung von Kühlaggregaten unterschiedlicher Bauweisen wird durch die DE 40 04 336 C1 vorgestellt. Ein Shredder sorgt für eine Vorzerkleinerung des Gehäuses der Kühlgeräte auf eine vertretbare Größe (A4 bis Faustgröße). Dieses grobe Mahlgut wird in eine Strahlmühle geführt, in der Mahlkörper mit hoher Geschwindigkeit in einen Trog geschleudert werden, der das grobe Mahlgut enthält. Der Trog ist als Sieb ausgebildet und schwingt um eine horizontale Achse. Das bis zu Pulver und feinen Flocken zerkleinerte Mahlgut aus Kunststoffen (Material der Schaumstoffe) fällt durch das Sieb und wird gemeinsam mit den Strahlkörnern durch weitere Abtrennvorrichtungen geführt, bis am Ende nur noch das Gas und die staub- oder pulverförmigen Teile der Schaumstoffe verbleiben. Die festen Stoffe und das Gas werden durch einen Fliehkraftabscheider voneinander getrennt.

Die festen Bestandteile werden unter Sicherung einer Gasabführung gepresst und für eine weitere Verarbeitung zur Verfügung gestellt. Das abgetrennte Gas wird aufbereitet, wobei das Treibgas entweder durch Kondensations- oder Destillationsvorgänge abgeschieden wird. Der Rest des Prozessgases gelangt über einen Kamin in die Umwelt.

Auch diese Anlage und diese Verfahrensweise erreichen nicht die notwendige Reinheit der zurückgewonnenen Kunststoffe. Der Anteil an Treibgasen in ihnen ist nach wie vor zu hoch und entspricht nicht den gesetzlichen Forderungen zum Schutz der Umwelt.

Mit der DE 42 24 749 A1 wird - unabhängig von irgendwelchen anderen Vorrichtungen einer Anlage - eine Ausgasvorrichtung für treibgashaltige Kunststoffe vorgestellt. Diese Ausgasvorrichtung besteht aus einem rohrförmigen Gehäuse, in dem eine Förderschnecke rotiert. Die Förderschnecke erstreckt sich durch das gesamte Gehäuse. In das rohrförmige Gehäuse wird Heißluft eingeführt, so dass bei höherer Temperatur, die unter dem Schmelzpunkt des Materials der Kunststoffe liegt, die daran gebundenen Treibgase gelöst werden können. Diese Treibgase werden abgesaugt und einer Aufbereitungsanlage zugeführt.

Mit der DE 100 62 947 A1 wird eine Verfahrensweise beschrieben, bei der besonderer Wert auf das Ausgasen der zerkleinerten Werkstoffpartikel gelegt wird. Es wird festgestellt, dass die Anwendung höherer Temperaturen beim Ausgasen des Mahlgutes begrenzt ist. Durch die Anwesenheit von bei niedrigen Temperaturen schmelzbaren Kunststoffen - z. B. Polystyrol - bilden sich Klumpen. Das Abtrennen dieser leichter schmelzbaren Kunststoffe nach dem Beispiel der DE 40 04 336 C1 ist demzugolge geboten.

Aus diesem Grund wird in der Anlage nach DE 100 62 947 A1 unmittelbar nach dem Zerkleinerungsvorgang, bei dem Kunststoffe - wie bei DE 40 04 336 C1 - auch bis zur Pulverform zerkleinert werden, zunächst ein Ausgasvorgang für das ungetrennte Mahlgut bei gemäßigten Temperaturen - ca. 80 °C - ausgeführt. Am Ende des bis zu einstündigen Ausgasvorganges wird das Mahlgut noch etwa 30 Minuten abgekühlt und anschließend in diesem Zustand mittels bekannter Siebanordnung in eine Grobfraktion und eine Feinfraktion getrennt. Für die Grobfraktion beginnt unmittelbar nach dem Abtrennen die weitere Aufbereitung mit der Abscheidung der Eisenwerkstoffe in einer gesonderten Atmosphäre. Die gekühlte Feinfraktion gelangt über eine Schleuse in eine weitere Ausgasvorrichtung. Sie wird dort erhitzt und unter ständiger Umwälzung und Förderung bis zu drei Stunden durch die Ausgasvorrichtung mit einer gesonderten erneuerbaren Atmosphäre bewegt.

Das Austragen der entgasten Feinfraktion erfolgt in üblicher Weise über eine Flügelschleuse. Die erste Ausgasvorrichtung, die Siebvorrichtung und die zweite Ausgasvorrichtung befinden sich in jeweils separaten Räumen und haben voneinander unabhängige Atmosphären, die gesondert überwacht und geregelt werden müssen.

Diese Art der Ausgasung nach der DE 100 62 947 A1 ist sehr energie- und zeitaufwändig. Allein in der ersten Ausgasstufe, wo das gesamte Mahlgutgemisch ca. 1 Stunde mit einer Temperatur von ca. 80 °C im Ausgasprozess verbleiben muss und anschließend etwa 30 Min. auf Raumtemperatur abgekühlt wird, erfordert erhebliche Energiemengen. Für die zweite Ausgasstufe, in der zwar nur die Feinfraktion präsent ist, muss dieselbe von Raumtemperatur auf etwa 130 °C erwärmt und auf dieser Temperatur bis zu drei Stunden gehalten werden. Auch hierfür ist ein erheblicher Energie- und Zeitaufwand erforderlich.

Als besonderer Nachteil der Verfahrensweise nach der DE 100 62 947 A1 ist noch zu vermerken, dass in einer Ausgasvorrichtung, die sich unmittelbar an die Zerkleinerungsvorrichtung anschließt, die Temperatur im Mahlgut sehr ungleichmäßig verteilt ist. Durch den Zerkleinerungsvorgang sehr stark erhitzte Teile aus Metall - diese sind gute Wärmespeicher - werden durch die zusätzliche Wärmezufuhr auf noch höhere Temperaturen erhitzt, so dass damit in Berührung kommende Polystyrolteile schmelzen und zusammen mit PUR-Pulver Klumpen bilden können. Diese Klumpen verstopfen die nachfolgenden Siebe und beeinträchtigen den weiteren Ausgasvorgang erheblich.

Die gesetzlich vorgeschriebene Grenze des Anteiles flüchtiger Gase in den wiederverwendbaren Rohstoffen lässt sich - wenn überhaupt - nur mit erheblichem Mehraufwand erreichen.

Die Aufgabe der vorliegenden Erfindung ist es, ein Verfahren und eine Anlage vorzuschlagen, die das kontrollierte Ausgasen der ursprünglich mit flüchtigen Treibgasen geschäumten Kunststoffe bei reduziertem Zeit- und Energieaufwand auf die gesetzlich vorgeschriebenen Grenzwerte ermöglichen.

Diese Aufgabe wird durch die Merkmale des erfindungsgemäßen Verfahrens gemäß Anspruch 1 auf überzeugende Weise gelöst. Mit der sofortigen Trennung von Grob- und Feinfraktion - unmittelbar nach dem weiteren Zerkleinerungsvorgang, der unter kontrollierter Temperatur abläuft - wird verhindert, dass Polystyrol zusammen mit pulverförmigem Polyuretan (PUR) verklumpt. Eine erneute Wärmezufuhr findet erst statt, wenn die Wärme speichernden Metallteile der Grobfraktion und auch die regelmäßig der Grobfraktion angehörenden Polystyrolteile, die einen niedrigen Schmelzpunkt aufweisen, von der weiter zu erhitzenden Feinfraktion getrennt sind.

Ein Kühlvorgang vor einer erneuten Erwärmung der Feinfraktion erübrigt sich. Die Verweildauer in den Ausgasvorrichtungen verkürzt sich deutlich auf maximal ein Drittel der in der DE 100 62 947 A1 angegebenen Zeit. Sie beträgt regelmäßig nur etwa 15 bis 20 Minuten. Der Trennvorgang wird zudem Bestandteil des Ausgasvorganges.

Die Zusammensetzung der Atmosphäre nach dem Verlassen der Zerkleinerungsvorrichtung - gemäß Anspruch 2 - muss nur noch in einem einzigen Raum geregelt werden. In diesem Raum sind zwar mehrere Saugstellen und mehrere Gaseinlässe vorhanden, aber eine Überwachung und Korrektur von Temperatur und Zusammensetzung der Atmosphäre ist nur in gefährdeten Bereichen erforderlich.

Durch die Erhöhung der Temperatur in der Ausgasvorrichtung nach Anspruch 3, welche über die Wand des besaugten Raumes erfolgt, wird der Wärmeübergang an die Partikel aus dem Schaum bildenden Kunststoff verbessert. Die an den Partikeln des Kunststoffes haftenden Reste des Treibgases werden fast vollständig abgelöst.

Eine deutliche Trennung der Atmosphären zwischen der Zerkleinerungsvorrichtung und den nachfolgenden Ausgas- und Trennvorrichtungen - nach Anspruch 4 - führt zu einer Reduzierung der Konzentration von Treibgasen in dem nachfolgenden Raum und unterstützt damit den Ausgasvorgang.

Einen korrekten Abschluss des an sich abgeschlossenen Ausgasvorganges erreicht man durch eine Kühlung der Feinfraktion unmittelbar vor dem Bereich der Ausgangsschleuse gemäß Anspruch 5.

Die Anlage zum Aufbereiten von Mahlgut mit Schaumstoffen, die Treibgas enthalten (gemäß Anspruch 6), ermöglicht eine besonders rationelle Arbeitsweise bei der Ausführung des Verfahrens nach Anspruch 1.

Die Anordnung der Heizvorrichtung in der Ausgasvorrichtung für die Feinfraktion nach Anspruch 7 ermöglicht eine optimale Entgasung ausschließlich der Kunststoffteile, die als Schaumwerkstoff eingesetzt waren.

Die Verwendung einer Zerkleinerungsvorrichtung nach Anspruch 8 gestattet bei vertretbarem Energieeintrag und bei vertretbaren Durchlaufzeiten der Zerkleinerungsvorrichtung ein zuverlässiges Entfernen der Schaumkunststoffe von den Metallteilen und ein weitgehendes Auflösen dieser Kunststoffteile bis hin zur Pulver- oder Flockenform.

Die Verwendung einer Stopfschnecke als Schleuse zwischen der Zerkleinerungsvorrichtung und der Siebvorrichtung - nach Anspruch 9 - führt zu einer weiteren Stauchung der Grobfraktion, so dass für die Weiterverarbeitung in einer Siebvorrichtung Störfaktoren durch sperrige Teile der Grobfraktion ausgeschlossen oder reduziert werden können.

Die verteilte Anordnung der Sauganschlüsse nach Anspruch 10 gewährleistet die Absaugung des mit Treibgas angereicherten Gases am Ort ihrer Anreicherung und vermeidet eine vorzeitige Mischung mit frisch regeneriertem Prozessgas.

Die Verwendung von rohrförmigen Gehäusen für die Förderschnecken reduziert den Raum um die Ausgasvorrichtungen und damit den Bedarf an regeneriertem, möglichst inertem Prozessgas.

Die Gestaltung der Schleuse am Ende der Ausgasvorrichtung für die Feinfraktion nach Anspruch 12 führt zu einer deutlichen Verdichtung der ausgegasten Feinfraktion und reduziert damit durch die reduzierte Oberfläche den Übergang von evtl. vorhandenen Resten an Treibgas an die Umwelt.

Wird gemäß Anspruch 13 das Gehäuse der Ausgasvorrichtung als Wärmetauscher der Heizvorrichtung verwendet, ist eine deutliche Reduzierung der Heizenergie in diesem Teil der Anlage möglich. Der durch den direkten Kontakt ermöglichte optimale Wärmeübergang schafft die Voraussetzung für eine nahezu vollständige Entfernung des an den Kunststoffpartikeln haftenden und diese umhüllenden Treibgases.

Die Gestaltung der Ausgasvorrichtung nach Anspruch 14 ermöglicht in besondes vorteilhafter Weise die Ausführung des Verfahrens nach Anspruch 5. Die Kühlung erfolgt dort, wo die entgaste Feinfraktion noch eine relativ große Oberfläche präsentiert.

Die Erfindung soll nachstehend an einem Ausführungsbeispiel beschrieben werden. In den dazu gehörigen Zeichnungen zeigen:

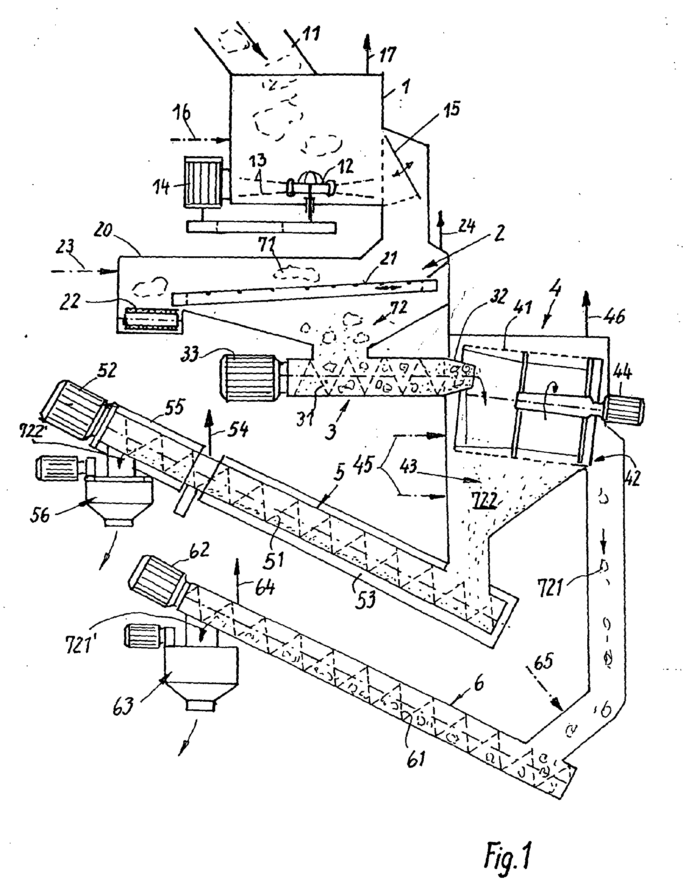

- Fig. 1: eine schematische Gesamtansicht der Aufbereitungsanlage,
- Fig. 2: eine besondere Schleusenanordnung für die entgaste Feinfraktion und
- Fig. 3: eine schematische Darstellung der Räume mit ihren Atmosphären.

Die vorliegende Erfindung wird anhand einer Aufbereitungsanlage für Kühlschränke oder anderer Kühlgeräte beschrieben. Diese Kühlgeräte besitzen in der Regel zur Wärmedämmung Wände mit Schaumstoffverkleidungen. Die Schaumstoffverkleidungen sind meist fest mit den metallischen Wänden der Gehäuse verbunden. In diesen Schaumstoffverkleidungen befinden sich regelmäßig flüchtige Gase (z. B. FCKW oder Cyclopentan), die sowohl die größeren Hohlräume des Schaumstoffes ausfüllen als auch an den jeweils präsenten Oberflächen des Kunststoffes haften.

Angesichts der bekannten Gefahr dieser flüchtigen Gase für die Umwelt soll das Gas möglichst vollständig aus dem wiederverwertbaren Kunststoff entfernt werden.

In einem nicht gezeigten, vorangestellten Arbeitsgang werden die von Motoren und anderen kompakten Teilen befreiten Kühlgeräte in einer inerten Atmosphäre vorzugsweise mittels Shredder zerteilt. Das den Shredder verlassende vorzerkleinerte Mahlgut 7 besteht aus unregelmäßigen meist durch Schneiden abgetrennten Teilen. Diese Teile werden direkt oder über eingehauste Förderanlagen einer weiteren Zerkleinerungsvorrichtung 1 über eine Schleuse 11 zugeführt.

Die weitere Zerkleinerungsvorrichtung 1 ist nach dem Prinzip einer Schlagmühle aufgebaut, wobei die Schlagwerkzeuge vorzugsweise aus Ketten 13 bestehen, die an einem Schleuderrad 12 beweglich und frei hängend befestigt sind. Die Glieder der Ketten 13 besitzen regelmäßig zwei Freiheitsgrade und sind damit in der Lage, von vorwiegend metallischen Teilen die dichten Werkstoffe der Schaumstoffe abzulösen und in einen pulver- oder flockenförmigen Zustand zu vermahlen.

Anstelle dieses zweistufigen Mahlvorganges ist es.- bei entsprechend längeren Mahlzeiten - durchaus möglich, auch mit einem einzigen Mahlvorgang die gleichen Ergebnissse zu erreichen.

Nach Beendigung des beschriebenen Mahlvorganges sind die meisten Metallteile frei von Schaumstoffresten. Die abgelösten Schaumstoffteile liegen überwiegend als Pulver oder in Form kleiner Flocken vor.

Die bei dem Mahlvorgang entstehende Wärme wäre geeignet, die frei werdenden flüchtigen Gase bei Anwesenheit von Luftsauerstoff zu entzünden. Zur Verhinderung von Explosionen wird daher der Mahlvorgang in einer inerten Atmosphäre durchgeführt. Zur Ausbildung dieser inerten Atmosphäre wird Stickstoff z. B. am Einlass 16 (der Einlass 16 steht für mehrere, verteilt angeordnete Einlässe) in den Zerkleinerungsraum eingeführt. Das durch den Mahvorgang mit Treibgas angereicherte inerte Prozessgas wird über den Sauganschluss 17 abgesaugt und in einer separaten Anlage aufbereitet.

Das Ergebnis dieses hier beschriebenen Gasaustausches bezeichnen wir im Folgenden als "erneuerbare Atmosphäre".

Nach einem abgeschlossenem Mahlvorgang wird die Klappe 15 oder auch ein Schieber geöffnet. Die durch den Motor 14 in Drehbewegung gehaltenen Ketten 13 schleudern das weiter zerkleinerte Mahlgut 71 und 72 in einen weiterführenden Schacht und von dort auf das Rüttelrost 2. Das Sieb 21 des Rüttelrostes 2 ist sehr grobmaschig und verhindert das Verbleiben evtl. vorhandener sperriger Teile 71 in dem weiter zu verarbeitetenden Mahlgut 72. Das sperrige Mahlgut 71 wird manuell oder über ein Förderband 22 zum Shredder zurückgeführt.

Über den Einlass 23 und über den Sauganschluss 24 wird auch in diesem Bereich eine kontinuierlich erneuerbare Atmosphäre gesichert.

Die durch das Sieb 21 des Rüttelrostes 2 hindurch fallenden Teile des Mahlgutes 72 werden im Bodenbereich des Rüttelrostes 2 von einer sog. Stopfschnecke 31 erfasst und beim Durchgang durch einen kegeligen Kanal 32 zusammengepresst und in die Siebtrommel 41 einer Siebvorrichtung 4 geführt.

Die mittels Motor 33 angetriebene Stopfschnecke 31 bildet durch das zusammengepresste Mahlgut 72 in dem kegeligen Kanal 32 eine Art Schleuse 3 aus. Das hier gestaute und geförderte Mahlgut 72 trennt die Atmosphäre des Zerkleinerers 1 und des Rüttelrostes 2 ausreichend zuverlässig von der Atmosphäre in den nachfolgenden Räumen.

Das aus dem kegelförmigen Kanal 32 in die Siebtrommel 41 fallende verdichtete Mahlgut 72 wird in der Siebtrommel 41 zunächst wieder aufgelöst. Die groben Bestandteile verlassen die Siebtrommel 41 am Überlauf 42 und fallen als Grobfraktion 721 in den geschlossenen Raum der Ausgasvorrichtung 6.

Diese Ausgasvorrichtung 6 besitzt eine Förderschnecke 61, die mittels Motor 62 langsam fördernd angetrieben wird. Während der Rotationsbewegung dieser Förderschnecke 61 wird das an der Grobfraktion 721 noch haftende Gas bei noch relativ hoher Temperatur abgelöst und gelangt über den Sauganschluss 64 in die Gasaufbereiturigsanlage.

An dem entgegengesetzten Abschnitt der Ausgasvorrichtung 6 wird frisches, aufbereitetes, vorzugsweise inertes Gas zugeführt. Die entgaste Grobfraktion 721' gelangt über eine Flügelschleuse 63 entweder in eine Verpackungseinrichtung oder in einen Prozess, in dem gezielt weitere Werkstoffe für die werkstoffliche Wiederverwertung aussortiert werden.

Die durch die Öffnungen oder Maschen (Weite: ca. 3 mm) des Siebes der Siebvorrichtung 4 fallenden Partikel, die in Form von Mehl oder kleinen Flocken vorliegen, gelangen in den Sammelraum 43 und bilden von da an die Feinfraktion 722.

Zur Sicherung einer optimalen Arbeitsweise der Siebvorrichtung 4 wird auch in diesem Bereich aufbereitetes, vorzugsweise inertes Gas über Einlässe 45 zugeführt und das mit Treibgas angereicherte Prozessgas bei 46 abgesaugt und der Gasaufbereitung zugeleitet.

Die Feinfraktion 722, die überwiegend aus dem Matrixwerkstoff des Schaumes besteht, gelangt aus dem Sammelraum 43 in die Ausgasvorrichtung 5. Diese Ausgasvorrichtung 5 ist - ebenso wie die Ausgasvorrichtung 6 - mit einer Förderschnecke 51 ausgestattet. Diese Förderschnecke 51 ist formschlüssig in einem rohrförmigen nach oben geneigten Gehäuse angeordnet und geführt. Die vom Motor 52 angetriebene Förderschnecke 51 bewegt die Feinfraktion 722 ständig umwälzend an der Wand des rohrförmigen Gehäuses entlang nach oben.

Im unteren Teil der Ausgasvorrichtung wird über die Wand des Gehäuses, die von einer Heizvorrichtung 53 umgeben ist, Wärme zugeführt, so dass der Wirkungsgrad des Ausgasens deutlich erhöht werden kann. Bei einer Temperatur, die vorzugsweise zwischen 120 °C und 150 °C liegt, lösen sich die die Kunststoffpartikel wie eine mikroskopisch kleine Atmosphäre umschließenden Treibgasteile und lassen sich über die erneuerbare Atmosphäre und den Sauganschluss 54 entfernen.

Durch den wiederholten direkten Kontakt der mikroskopischen Atmosphären der kleinen pulverförmigen Partikel mit der heißen Wand der Ausgasvorrichtung 5, die praktisch als Wärmetauscher wirksam ist, ist ein sehr guter Wärmeübergang gewährleistet. Der Effekt des Ausgasens ist in diesem Bereich sehr hoch.

Der durch das ständige Besaugen entstehende Unterdruck in der Ausgasvorrichtung wird mittels aufbereitetem, inerten Prozessgas, das über den Einlass 45 zugeführt wird, derart geregelt ausgeglichen, dass ein permanenter leichter Unterdruck erhalten bleibt.

Zur Unterbrech ung des Ausgasprozesses der Feinfraktion 722 empfiehlt es sich, das regelmäßig vollständig ausgegaste Mahlgut der Feinfraktion 722' unmittelbar vor dem Verlassen der Ausgaseinrichtung 5 abzukühlen. Evtl. verbleibende Gasreste werden dann zuverlässig von den Adhäsionskräften der Partikel gebunden.

Diese entgaste Feinfraktion 722' wird über eine Schleuse 56 aus der Ausgasvorrichtung 5 herausgeführt und auf beliebige Weise der weiteren Verwertung oder einer Verpackungseinheit zugeführt.

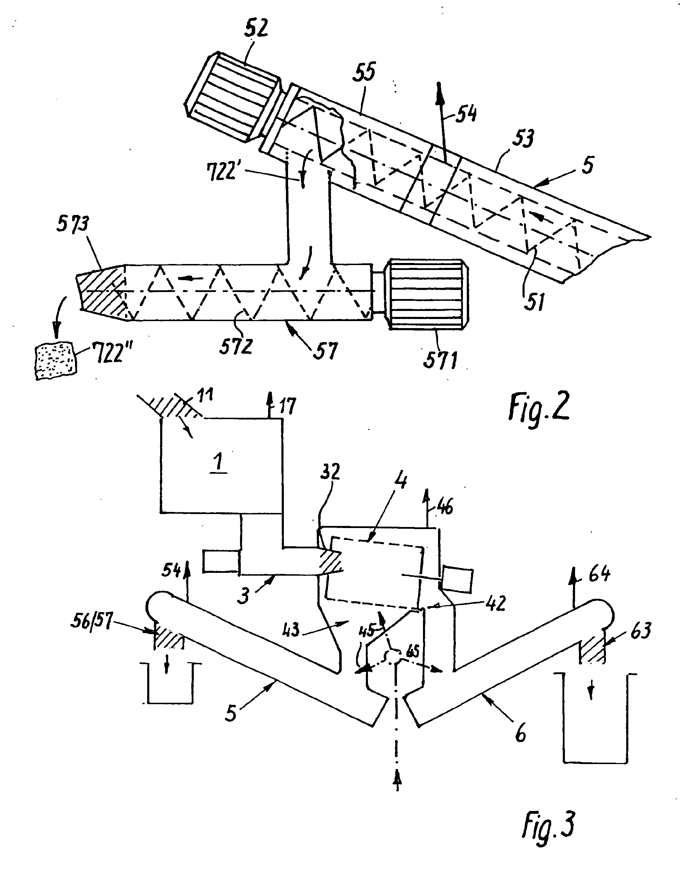

Eine zweite Form der Entfernung des Mahlgutes der Feinfraktion 722' aus der Ausgasvorrichtung 5 zeigt die Fig. 2. Hier wird für die Sicherung der Schleusenfunktion (Schleuse 57) eine sog. Stopfschnecke 572, die durch den Motor 571 angetrieben wird, verwendet. Die Stopfschnecke 572 presst das entgaste Mahlgut 722' durch den Kegel 573. In diesem Kegel staut und verfestigt sich das Mahlgut, so dass es in Form von Klumpen 722" oder Granulat mit relativ kleiner Oberfläche der weiteren Verarbeitung zugeführt werden kann.

Es hat sich als zweckmäßig erwiesen, für das Ausgasen des Mahlgutes eine etwas andere Atmosphäre bereit zu stellen, als sie innerhalb der Wärme erzeugenden und Treibgase in großer Menge freisetzenden Zerkleinerungsanordnung 1 unter Anwesenheit von Polystyrol zwingend vorgeschrieben ist. Die Temperatur wird durch Kühlung und die Konzentration von Treibgas und Stickstoff durch die Erneuerung der Atmosphäre geregelt.

In dem Ausgasbereich ist zwar eine evtl. Anwesenheit von Sauerstoff nicht mehr so gefährlich, wie das innerhalb der Zerkleinerungsanordnung der Fall ist. Trotzdem wird auch in diesem Bereich eine inerte Atmosphäre verwendet, weil es im erheblichen Maße kostenaufwändig wäre, das Treibgas aus zwei verschiedenen Gasgemischen zu entfernen.

Die Verwendung einer inerten Atmosphäre in den Ausgasbereichen ist nur aus diesem Grunde dringend geboten. Der relativ teure reine Stickstoff wird vorwiegend der Zerkleinerungsvorrichtung 1 zugeführt, während die Atmospäre der Ausgasvorrichtungen regelmäßig mit regeneriertem, inertem Gas beschickt wird.

Der Raum um die Siebvorrichtung 4 ist mit den Räumen der Ausgasvorrichtungen 5 und 6 ohne gesonderte Schleusenanordnungen verbunden (Vgl. Fig 3). Innerhalb jeder Baugruppe - nämlich der Siebvorrichtung 4 und der beiden Ausgasvorrichtungen 5, 6 - sind Einlässe 45, 65 für das aufbereitete Prozessgas und Sauganschlüsse 46, 54, 64 für das mit Treibgas angereicherte Gas vorgesehen.

Die Ausgänge des jeweiligen Mahlgutstromes sind mit Schleusenanordnungen 56; 57, 63 versehen, die das Austreten von angereichertem Prozessgas in die Umwelt vermeiden.

Der Vorteil der erfindungsgemäßen Verfahrensweise und Anlage besteht darin, dass das aufzubereitende Mahlgut 72 in einer separaten Atmosphäre unmittelbar anschließend an die Zerkleinerungsvorrichtung 1 bei relativ hoher Temperatur gesiebt wird. Das in der Zerkleinerungsvorrichtung 1 beginnende Ausgasen wird vor und während des Siebvorganges nicht unterbrochen.

Das abschließende Ausgasen der Grobfraktion 721 erfolgt ebenso ohne weitere Wärmezuführung. In den dort regelmäßig befindlichen Werkstoffen ist Treibgas nur noch lose haftend an der Oberfläche der größeren Teile vorhanden. Für das Lösen dieser Treibgase reicht die vom Zerkleinerungsvorgang noch vorhandene Restwärme. In der relativ kurzen Verweilzeit in der Siebvorrichtung 4 und in der Ausgasvorrichtung 6 findet nur eine geringe Abkühlung statt.

Eine weitere Wärmezuführung, die sichert, dass auch das Gas von den Mikroatmosphären des PUR-Pulvers abgelöst wird, beschränkt sich lediglich auf die Teile des Mahlgutes der Feinfraktion 722, die im Zerkleinerer pulverförmig oder zu kleinen Flocken zermahlen wurden. Die dafür erforderliche Energie hält sich in Grenzen, so dass der Vorgang des Ausgasens bis zu dem festgelegten Grenzwert mit vertretbaren Kosten realisiert werden kann.

Die Kühlanordnung 55 und die Verwendung von sog. Stopfschnecken 572 als Schleusen 57 verhindern, dass die die Ausgasvorrichtung 5 verlassenden Werkstoffe - die entgaste und gepresste Feinfraktion 722" - bei normaler Temperatur noch evtl. vorhandene Reste von Treibgas an die Atmosphäre abgeben.

### Bezugszeichenliste

- 1: Zerkleinerungsvorrichtung, weitere
- 11: Schleuse
- 12: Schleuderrad
- 13: Ketten/Schlagwe rkzeuge
- 14: Motor
- 15: Austragsklappe
- 16: Einlass (Inertgas)
- 17: Sauganschluss
- 2: Sperrgutabscheider
- 20: Gehäuse
- 21: Rüttelsieb
- 22: Förderband
- 23: Einlass (Inertgas)
- 24: Sauganschluss
- 3: Schleuse
- 31: Stopfschnecke
- 32: Kegel
- 33: Motor
- 4: Siebvorrichtung
- 41: Siebtrommel
- 42: Überlauf
- 43: Sammelraum
- 44: Motor
- 45: Einlass (Inertgas)
- 46: Saugansch luss
- 5: Ausgasvorrichtung
- 51: Fördersch necke
- 52: Motor
- 53: Heizvorrichtung
- 54: Saugansch luss
- 55: Kühlvorrichtung
- 56: Schleuse / Flügelschleuse
- 57: Schleuse / Stopfschnecke
- 6: Ausgasvorrichtung
- 61: Förderschnecke
- 62: Motor
- 63: Schleuse / Flügelschleuse
- 64: Sauganschluss
- 65: Einlass
- 7: Mahlgut, vorzerkleinert
- 71: Sperrgut
- 72: Mahlgut, weiter zerkleinert
- 721: Grobfraktion
- 721': Grobfraktion, entgast
- 722: Feinfraktion
- 722': Feinfraktion, entgast
- 722": Feinfraktion, entgast, gepresst

## Patentansprüche

1. Verfahren zum Aufbereiten von Treibgas enthaltendem Mahlgut,
wobei in einem Zerkleinerungsvorgang mittels Schlagelementen, die mehrere Freiheitsgrade besitzen, innerhalb eines geschlossenen Raumes mit erneuerbarer, inerter Atmosphäre, weiter zerkleinertes Mahlgut (72) erzeugt wird, das auch eine Feinfraktion (722) besitzt, die pulver-und/oder flockenförmig zerkleinertes Schaumstoffmaterial aufweist,
wobei die Feinfraktion (722) mittels Siebvorrichtung (4) von einer Grobfraktion (721) abgeschieden wird und
wobei das weiter zerkleinerte Mahlgut (72) in mindestens einem abgeschlossenen Raum mit erneuerbarer Atmosphäre einem Ausgasprozess unterworfen wird,
**dadurch gekennzeichnet,**
**dass** das zerkleinerte Mahlgut (72) am Ausgang der Zerkleinerungsvorrichtung (1) über eine Schleuse (3) direkt in eine eingehaüste Siebvorrichtung (4) gefördert wird,
**dass** die beiden, die Siebvorrichtung (4) verlassenden Mahlgutströme - nämlich die Feinfraktion (722) und die Grobfraktion (721) - jeweils einzeln, entgasend durch rohrförmig ausgebildete, besaugte Räume (Ausgasvorrichtungen 5, 6) sich umwälzend gefördert werden und
**dass** die entgasten Mahlgutströme der Feinfraktion (722') und der Grobfraktion (721') an den Ausgängen der besaugten Räume (5, 6) über Schleusen (56, 57, 63) der weiteren Aufbereitung oder Verwertung zugeführt werden.

2. Verfahren nach Anspruch 1, **dadurch gekennzeichnet,**
**dass** das zerkleinerte Mahlgut (72) vom Bereich der eingehausten Siebvorrichtung (4) bis zu den Schleusen (56; 57; 63) am Ausgang durch eine geschlossene, erneuerbare Atmosphäre geführt wird und
**dass** diese erneuerbare Atmosphäre überwiegend mit regeneriertem inerten Prozessgas erneuert wird.

3. Verfahren nach Anspruch 1, **dadurch gekennzeichnet,**
**dass** der Mahlgutstrom der Feinfraktion während der umwälzenden, entgasenden Förderung über die Wand ihres besaugten Raumes (Ausgasvorrichtung 5) auf 120 °C bis 130 °C erwärmt wird.

4. Verfahren nach Anspruch 1, **dadurch gekennzeichnet,**
**dass das** zerkleinerte Mahlgut (72) am Ausgang der Zerkleinerungsvorrichtung (1) mittels sog. Stopfschnecke verdichtet und durch einen sich kegelförmig verengenden Kanal (Kegel 32), der als Schleuse (3) wirksam ist, in die Siebvorrichtung (4) gefördert wird.

5. Verfahren nach Anspruch 1, **dadurch gekennzeichnet,**
**dass** der Mahlgutstrom der entgasenden Feinfraktion (722') unmittelbar vor dem Erreichen der Ausgangsschleuse (56; 57) gekühlt wird.

6. Anlage zum Aufbereiten von Mahlgut mit Schaumstoffen, die Treibgase enthalten, bestehend
aus mindestens einer Zerkleinerungsvorrichtung (1)
mit angetriebenen Schlagelementen (13), die mehrere Freiheitsgrade besitzen, innerhalb eines geschlossenen Raumes mit erneuerbarer, inerter Atmosphäre,
mit mindestens einer Schleuse (3) für das Austragen des weiter zerkleinerten Mahlgutes (72) und
aus einer Siebvorrichtung (4) zur Trennung des zerkleinerten Mahlgutes mit einem Überlauf (42) für eine Grobfraktion (721) und
mit einem Sammler (43) für eine Feinfraktion (722), und
aus mindestens einer rohrförmigen Ausgasvorrichtung (5),
mit angetriebenen Förderelementen, z. B Förderschnecken (51), zur umwälzenden Bewegung und Förderung des Mahlgutes und
mit Sauganschlüssen (54) für das Absaugen von mit Treibgas angereichertem Gas,
**dadurch gekennzeichnet,**
**dass** die Schleuse (3) am Ausgang der Zerkleinerungsvorrichtung (1) in die Siebvorrichtung (4) mündet,
**dass** an den Überlauf (42) der Siebvorrichtung (4) eine erste Ausgasvorrichtung (6) für die Grobfraktion (721) und
an den Sammler (43) unterhalb des Siebes eine zweite Ausgasvorrichtung (5) für die Feinfraktion (722) angeschlossen ist,
**dass** die Siebvorrichtung (4) und die erste und zweite Ausgasvorrichtung (5, 6) in einem geschlossenen Raum angeordnet sind und
**dass** im Bereich der Ausgangsöffnungen für den Mahlgutstrom der beiden Ausgasvorrichtungen (5, 6) Schleusen (56; 57, 63) vorgesehen sind.

7. Anlage nach Anspruch 6, **dadurch gekennzeichnet,**
**dass** der zweiten Ausgasvorrichtung (5) für die Feinfraktion (722) eine Heizvorrichtung (53) zugeordnet ist.

8. Anlage nach Anspruch 6, **dadurch gekennzeichnet,**
**dass** die Zerkleinerungsvorrichtung (1) eine Mühle ist, die mit Schlagwerkzeugen in Form von Ketten (13) ausgestattet ist, die an einer vertikalen, umlaufenden Achse befestigt sind.

9. Anlage nach Anspruch 6,
die Schleuse (3) am Ausgang der Zerkleinerungsvorrichtung (1) als Stopfschnecke (31) ausgebildet ist, deren Eingangsöffnung mit dem Bodenbereich der Zerkleinerungsvorrichtung (1) verbunden ist und deren sich kegelförmig verengende Ausgangsöffnung (32) oberhalb der bewegbaren Siebelemente (Siebtrommel 41) mündet.

10. Anlage nach Anspruch 6, **dadurch gekennzeichnet,**
**dass** in den Bereichen der Siebvorrichtung (4) und der Ausgasvorrichtungen (5, 6) mindestens je ein Sauganschluss (46, 54, 64) für mit Treibgas angereichertes Gas vorgesehen sind.

11. Anlage nach Anspruch 6, **dadurch gekennzeichnet,**
**dass** die Ausgasvorrichtungen (5, 6) ein rohrförmiges Gehäuse besitzen, in denen umlaufende Förderschnecken (51, 61) angeordnet sind.

12. Anlage nach Anspruch 6, **dadurch gekennzeichnet,**
**dass** die Schleuse (57) am Mahlgutausgang der Ausgasvorrichtung (5) für die Feinfraktion (722) mit einer Stopfschnecke (572) ausgestattet ist.

13. Anlage nach Anspruch 6 und 7, **dadurch gekennzeichnet,**
**dass** die Heizvorrichtung (53) an der Ausgasvorrichtung (5) für die Feinfraktion (722) mit einem Wärmetauscher versehen ist, der durch die Wand des rohrförmigen Gehäuses gebildet ist.

14. Anlage nach Anspruch 6 und 7, **dadurch gekennzeichnet,**
**dass** im Bereich des Ausganges der zweiten Ausgasvorrichtung (5) eine Kühlvorrichtung (55) für die entgaste Feinfraktion (722') angeordnet ist.

## Claims

1. Method for treating propellant-containing material to be ground,
wherein in a comminution process, by means of beating elements having several degrees of freedom, within a closed chamber with a renewable inert atmosphere further comminuted material (72) is produced, which also has a fine fraction (722) comprising foam material comminuted in powder and/or flake form,
wherein the fine fraction (722) is separated from a coarse fraction (721) with a screening device (4), and
wherein the further comminuted material (72) is subjected to a degassing process in at least one sealed chamber with a renewable atmosphere,
**characterised**
**in that** the comminuted material (72) at the outlet of the comminution device (1) is conveyed via a lock (3) directly into an enclosed screening device (4),
**in that** the two streams of material to be ground leaving the screening device (4) - namely the fine fraction (722) and the coarse fraction (721) - are each conveyed individually in circulation through exhausted chambers of tubular construction with degassing effect (degassing devices 5, 6), and
**in that** the degassed streams of the fine fraction (722') of material to be ground and of the coarse fraction (721') at the outlets of the exhausted chambers (5, 6) are delivered via locks (56, 57, 63) for further treatment or processing.

2. Method according to claim 1, **characterised**
**in that** the comminuted material (72) is conducted from the region of the enclosed screening device (4) to the locks. (56; 57, 63) at the outlet through a closed, renewable atmosphere, and
**in that** this renewable atmosphere is mainly renewed with regenerated inert process gas.

3. Method according to claim 1, **characterised**
**in that** the stream of the fine fraction of material to be ground is heated to 120°C to 130°C during circulating, degassing transport over the wall of its exhausted chamber (degassing device 5).

4. Method according to claim 1, **characterised**
**in that** the comminuted material (72) is compressed at the outlet of the comminution device (1) by means of a so-called tamping screw and conveyed into the screening device (4) through a conically narrowing channel (cone 32) which acts as a lock (3).

5. Method according to claim 1, **characterised**
**in that** the stream of the degassing fine fraction (722') of material to be ground is cooled immediately before reaching the outlet lock (56; 57).

6. Apparatus for treating material to be ground with propellant-containing foam materials, consisting of
at least one comminution device (1)
having driven beating elements (13) which have several degrees of freedom, within a closed chamber with a renewable inert atmosphere,
having at least one lock (3) for discharge of the further comminuted material (72), and
a screening device (4) for separating the comminuted material with an overflow (42) for a coarse fraction (721) and
with a collector (43) for a fine fraction (722), and
at least one tubular degassing device (5),
having driven conveying elements, e.g. conveyor screws (51), for circulating movement and transport of the material to be ground, and
having exhaust connections (54) for drawing off propellant-enriched gas,
**characterised**
**in that** the lock (3) leads into the screening device (4) at the outlet of the comminution device (1),
**in that** connected to the overflow (42) of the screening device (4) is a first degassing device (6) for the coarse fraction (721) and
connected to the collector (43) below the screen is a second degassing device (5) for the fine fraction (722),
**in that** the screening device (4) and the first and second degassing devices (5, 6) are arranged in a closed chamber, and
**in that** in the region of the outlet openings of the two degassing devices (5, 6) for the stream of material to be ground are provided locks (56; 57, 63).

7. Apparatus according to claim 6, **characterised in that** associated with the second degassing device (5) for the fine fraction (722) is a heating device (53).

8. Apparatus according to claim 6, **characterised in that** the comminution device (1) is a mill which is equipped with beating tools in the form of chains (13) which are attached to a vertical, rotating shaft.

9. Apparatus according to claim 6, **characterised in that** the lock (3) at the outlet of the comminution device (1) is designed as a tamping screw (31) of which the inlet opening is connected to the bottom region of the comminution device (1) and of which the conically narrowing outlet opening (32) opens out above the movable screening elements (screen drum 41).

10. Apparatus according to claim 6, **characterised in that** in the regions of the screening device (4) and the degassing devices (5, 6) are provided in each case at least one exhaust connection (46, 54, 64) for propellant-enriched gas.

11. Apparatus according to claim 6, **characterised in that** the degassing devices (5, 6) have a tubular housing, in which are arranged rotating conveyor screws (51, 61).

12. Apparatus according to claim 6, **characterised in that** the lock (57) at the outlet of the degassing device (5) for the fine fraction (722) of the material to be ground is provided with a tamping screw (572).

13. Apparatus according to claims 6 and 7, **characterised in that** the heating device (53) on the degassing device (5) for the fine fraction (722) is provided with a heat exchanger which is formed by the wall of the tubular housing.

14. Apparatus according to claims 6 and 7, **characterised in that** in the region of the outlet of the second degassing device (5) is arranged a cooling device (55) for the degassed fine fraction (722').

## Revendications

1. Procédé pour traiter des matériaux broyés contenant un gaz propulseur,
selon lequel lors d'une opération de désintégration à l'aide d'éléments de percussion qui présentent plusieurs degrés de liberté, à l'intérieur d'un espace fermé avec une atmosphère inerte renouvelable, on produit un matériau broyé désintégré plus fin (72) qui comporte aussi une fraction fine (722) contenant un produit alvéolaire désintégré en forme de poudre et/ou de flocons,
la fraction fine (722) est séparée d'une fraction grossière (721) à l'aide d'un dispositif de criblage (4),
et le matériau broyé désintégré (72) est soumis à un processus de dégazage dans au moins un espace fermé à atmosphère renouvelable,
**caractérisé en ce que** le matériau broyé désintégré (72), à la sortie du désintégrateur (1), est amené directement dans un dispositif de criblage enfermé (4), par l'intermédiaire d'un sas (3),
**en ce que** les deux courants de matériau broyé qui sortent du dispositif de criblage (4) - c'est-à-dire la fraction fine (722) et la fraction grossière (721) - traversent en tournant des espaces respectifs (dispositifs d'évacuation de gaz 5, 6) de forme tubulaire soumis à une aspiration, en subissant un dégazage,
et **en ce que** les courants dégazés de matériau broyé de la fraction fine (722') et de la fraction grossière (721') obtenus à la sortie des espaces soumis à l'aspiration (5, 6) sont transférés par l'intermédiaire de sas (56, 57, 63) vers la suite du traitement ou de la récupération.

2. Procédé selon la revendication 1, **caractérisé en ce que** le matériau broyé désintégré (72), de la zone du dispositif de criblage enfermé (4) jusqu'aux sas (56 ; 57, 63) prévus à la sortie, traverse une atmosphère fermée renouvelable,
et **en ce que** cette atmosphère renouvelable est renouvelée principalement avec un gaz de traitement inerte régénéré.

3. Procédé selon la revendication 1, **caractérisé en ce que** le courant de matériau broyé de la fraction fine est chauffé à 120°C-130°C par l'intermédiaire de la paroi de son espace aspiré (dispositif d'évacuation de gaz 5) pendant son transport rotatif de dégazage.

4. Procédé selon la revendication 1, **caractérisé en ce que** le matériau broyé désintégré (72) est compacté à la sortie du désintégrateur (1) à l'aide de ce qu'on appelle une vis de bourrage et est amené dans le dispositif de criblage (4) par un conduit effilé en cône (cône 32) qui agit comme un sas (3).

5. Procédé selon la revendication 1, **caractérisé en ce que** le courant de matériau broyé de la fraction fine dégazée (722') est refroidi juste avant d'atteindre le sas de sortie (56 ; 57).

6. Installation pour traiter des matériaux broyés qui comportent des produits alvéolaires contenant des gaz propulseurs, comprenant
- au moins un désintégrateur (1) équipé
d'éléments de percussion entraînés (13) qui ont plusieurs degrés de liberté, à l'intérieur d'un espace fermé à atmosphère inerte renouvelable, et
d'au moins un sas (3) pour l'évacuation du matériau broyé désintégré plus fin (72),
- un dispositif de criblage (4) pour séparer le matériau broyé désintégré, avec un trop-plein (42) pour une fraction grossière (721) et un collecteur (43) pour une fraction fine (722), et
- au moins un dispositif tubulaire d'évacuation de gaz (5) équipé
d'éléments transporteurs entraînés, par exemple des vis sans fin (51), pour déplacer et transporter le matériau broyé tout en le faisant tourner, et
de raccordements d'aspiration (54) pour aspirer le gaz enrichi de gaz propulseur,
**caractérisée en ce que** le sas (3) prévu à la sortie du désintégrateur (1) débouche dans le dispositif de criblage (4),
**en ce qu'**il est prévu, relié au trop-plein (42) du dispositif de criblage (4), un premier dispositif d'évacuation de gaz (6) pour la fraction grossière (721), et relié au collecteur (43) situé au-dessous du crible, un second dispositif d'évacuation de gaz (5) pour la fraction fine (722),
**en ce que** le dispositif de criblage (4) et les premier et second dispositifs d'évacuation de gaz (5, 6) sont disposés dans un espace fermé,
et **en.ce que** des sas (56 ; 57, 63) sont prévus dans la zone des ouvertures de sortie prévues pour le courant de matériau broyé des deux dispositifs d'évacuation de gaz (5, 6).

7. Installation selon la revendication 6, **caractérisée en ce qu'**un dispositif de chauffage (53) est associé au second dispositif d'évacuation de gaz (5) pour la fraction fine (722).

8. Installation selon la revendication 6, **caractérisée en ce que** le désintégrateur (1) est un broyeur qui est équipé d'outils de percussion en forme de chaînes (13) fixées à un axe rotatif vertical.

9. Installation selon la revendication 6, **caractérisée en ce que** le sas (3) prévu à la sortie du désintégrateur (1) est conçu comme une vis de bourrage (31) dont l'ouverture d'entrée est reliée à la zone inférieure du désintégrateur (1) et dont l'ouverture de sortie effilée en cône (32) débouche au-dessus des éléments de criblage mobiles (tambour cribleur 41).

10. Installation selon la revendication 6, **caractérisée en ce qu'**il est prévu dans les zones du dispositif de criblage (4) et de chacun des dispositifs d'évacuation de gaz (5, 6) au moins un raccordement d'aspiration (46, 54, 64) pour le gaz enrichi de gaz propulseur.

11. Installation selon la revendication 6, **caractérisée en ce que** les dispositifs d'évacuation de gaz (5, 6) ont un carter tubulaire dans lequel sont disposées des vis sans fin rotatives (51, 61)

12. Installation selon la revendication 6, **caractérisée en ce que** le sas (57) prévu à la sortie de matériau du dispositif d'évacuation de gaz (5) pour la fraction fine (722) est équipé d'une vis de bourrage (572).

13. Installation selon les revendications 6 et 7, **caractérisée en ce que** le dispositif de chauffage (53) prévu sur le dispositif d'évacuation de gaz (5) pour la fraction fine (722) est pourvu d'un échangeur de chaleur qui est formé par la paroi du carter tubulaire.

14. Installation selon les revendications 6 et 7, **caractérisée en ce qu'**il est prévu dans la zone de la sortie du second dispositif d'évacuation de gaz (5) un dispositif de refroidissement (55) pour la fraction fine dégazée (722').
